# EUROPÄISCHE PATENTANMELDUNG

(11) **EP 4 516 650 A1**
(43) Veröffentlichungstag der Anmeldung: **05.03.2025**
(21) Anmeldenummer: 24190887.0
(22) Anmeldetag: 25.07.2024
(51) Int. Cl.: B62J 45/41, B62M 6/45

(54) **VERFAHREN ZUM BETREIBEN EINES ANTRIEBSSYSTEMS EINES ZUMINDEST ZEITWEISE ELEKTRISCH ANGETRIEBENEN FAHRRADS**

(30) Priorität: 04.08.2023 DE 102023207526
(71) Anmelder: Robert Bosch GmbH, 70442 Stuttgart (DE)
(72) Erfinder: Morlok, Frederik, 72218 Wildberg Gueltlingen (DE); Baumgaertner, Sebastian, 72622 Nuertingen-Raidwangen (DE); Vollmer, Ulrich, 73235 Weilheim (DE); Ophey, Julian, 71272 Renningen (DE)

(57) **Zusammenfassung**

Die vorliegende Erfindung betrifft ein Verfahren (100) zum Betreiben eines eine Mehrzahl von Komponenten (202, 204, 205) umfassenden Antriebssystems (200) eines zumindest zeitweise elektrisch angetriebenen Fahrrads (300), aufweisend die Schritte:
- Bereitstellen (S1) zumindest einer Anforderung einer ersten Komponente (202) und einer Anforderung einer zweiten Komponente (204) aus der Mehrzahl der Komponenten des Antriebssystems (200),
- Vergleichen (S2) der Anforderung der ersten Komponente (202) mit der Anforderung der zweiten Komponente (204) hinsichtlich einer thermischen Belastungssituation der ersten Komponente (202) und der zweiten Komponente (204),
- Anpassen (S3) eines Betriebsverhaltens der ersten Komponente (202) und/oder der zweiten Komponente (204) auf Basis des Vergleichs.

## Beschreibung

### Stand der Technik

Die vorliegende Erfindung betrifft ein Verfahren zum Betreiben eines Antriebssystems eines zumindest zeitweise elektrisch angetriebenen Fahrrads und ein Antriebssystem für ein zumindest zeitweise elektrisch angetriebenes Fahrrad sowie ein Fahrrad.

Derzeit besteht eine Vielzahl an unterschiedlichen Lösungen zur Verbesserung der Fahrdynamik von elektrisch angetriebenen Fahrrädern bzw. E-Bikes. Durch die zunehmende Vielfalt an Antriebskonzepten bei elektrisch angetriebenen Fahrrädern steigt kontinuierlich der Bedarf an robusten und innovativen Steuerungsmethoden.

### Offenbarung der Erfindung

Das erfindungsgemäße Verfahren zum Betreiben eines eine Mehrzahl von Komponenten umfassenden Antriebssystems eines zumindest zeitweise elektrisch angetriebenen Fahrrads mit den Merkmalen des Anspruchs 1 weist gegenüber dem Bekannten den Vorteil auf, dass mithilfe der systembasierten bzw. makroskopischen Überwachung eines elektrischen Fahrradantriebssystems eine thermische Überlastung einzelner Komponenten vermieden werden kann, ohne dabei das Fahrverhalten bzw. die Fahrdynamik des elektrisch angetriebenen Fahrrads wesentlich zu beeinflussen. Dabei kann eine Beeinflussung des Fahrverhaltens bzw. der Fahrdynamik insbesondere derart erfolgen, dass diese für einen Fahrer eines Fahrrads kaum merklich ist. Weiter bevorzugt ist es möglich, mit dem Verfahren ein reproduzierbares Kundenerlebnis zu schaffen, unabhängig von äußeren Einflüssen und Gestaltungsmerkmalen des elektrischen Antriebssystems des Fahrrads, indem das Betriebsverhalten der Komponenten des Antriebssystems in einer thermischen Belastungssituation aufeinander abgestimmt ist. Das Antriebssystem kann sich selbstständig und ohne Nutzereingabe derart regeln, dass keine Limitierung einer der Komponenten auftritt. Die Fahrdynamik für den Nutzer bleibt möglichst unverändert, unabhängig von der thermischen Belastungssituation der einzelnen Komponenten. Ein weiterer Vorteil ist, dass eine eventuelle Leistungsreduktion zum Bauteilschutz flexibel anpassbar ist, welche derart anpassbar ist, dass ein möglichst geringer Einfluss auf die Fahrdynamik des elektrisch angetriebenen Fahrrads vorliegt.

Dies wird erfindungsgemäß dadurch erreicht, dass das Verfahren zum Betreiben eines eine Mehrzahl von Komponenten umfassenden Antriebssystems eines zumindest zeitweise elektrisch angetriebenen Fahrrads die Schritte aufweist:
- Bereitstellen zumindest einer Anforderung einer ersten Komponente und einer Anforderung einer zweiten Komponente aus der Mehrzahl der Komponenten des Antriebssystems,
   - Vergleichen der Anforderung der ersten Komponente mit der Anforderung der zweiten Komponente hinsichtlich einer thermischen Belastungssituation der ersten Komponente und der zweiten Komponente,
   - Anpassen eines Betriebsverhaltens der ersten Komponente und/oder der zweiten Komponente auf Basis des Vergleichs.

Mit anderen Worten kann mittels des Verfahrens das Betriebsverhalten zumindest einer Komponente angepasst werden infolge eines Vergleichs der Mehrzahl von Komponenten des Antriebssystems. Das Anpassen des Betriebsverhaltens erfolgt insbesondere derart, dass eine Leistungsabgabe einer Komponente der Mehrzahl von Komponenten zumindest zeitweise reduziert wird. Dabei kann die Anpassung des Betriebsverhaltens eine Reduzierung einer Leistungsabgabe einer Batterieeinheit, eine Reduzierung der Aufnahmeleistung einer elektrischen Antriebseinheit, eine Reduzierung des Drehmoments der elektrischen Antriebseinheit und/oder Ähnliches sein. Ferner kann mit dem Verfahren zumindest eine Eigenschaft einer Komponente aus der Mehrzahl von Komponenten erfasst werden. Dabei kann beispielsweise eine Eigenschaft wie ein Temperaturwerterfasst werden. Anhand des Vergleichs zwischen den Anforderungen der beiden Komponenten kann das Betriebsverhalten der Komponenten angepasst werden.

Beispielsweise liegt eine Anforderung in Form einer Erhöhung einer Leistungsabgabe, wie zum Beispiel eine Geschwindigkeitserhöhung oder eine Drehmomenterhöhung eines Nutzers des elektrisch angetriebenen Fahrrads, vor. Das Antriebssystem ermittelt beispielsweise, wie lange eine solche erhöhte Leistungsabgabe bereitgestellt werden kann unter Berücksichtigung der thermischen Belastungssituation der einzelnen Komponenten. Danach kann das Betriebsverhalten einer oder mehrerer Komponenten gezielt angepasst werden, um unabhängig von einer thermischen Belastungssituation einer einzelnen oder mehrerer Komponenten ein reproduzierbares und komfortables Fahrerlebnis bereitzustellen. Insbesondere kann auf Basis des Vergleichs der Anforderungen der Komponenten das Betriebsverhalten der Komponenten aufeinander abgestimmt angepasst werden.

Das Antriebssystem umfasst eine Mehrzahl von Komponenten. Bei der ersten Komponente handelt es sich insbesondere um eine Antriebseinheit, bei der zweiten Komponente insbesondere um eine Batterieeinheit. Als weitere Komponente des Antriebssystems kommt jede Komponente eines Fahrrads in Betracht, welche mechanische, elektrische und/oder elektronische Bauteile aufweist und im Betrieb des Antriebssystems eine mechanische und/oder elektrische Leistung abgibt. Unter einer Leistungsabgabe einer Komponente ist im weiten Sinne jede Abgabe bzw. Ausgabe einer physikalischen Größe zu verstehen, welche die jeweilige Komponente bereitstellt und welche ihre Leistungsfähigkeit repräsentiert. Auch eine Angabe einer physikalischen Größe pro Zeiteinheit kann die Leistungsabgabe einer Komponente repräsentieren. Eine Leistungsabgabe der Batterieeinheit kann zum Beispiel ausgedrückt sein durch eine elektrische Leistung oder ein Entladestrom. Eine Leistungsabgabe einer Antriebseinheit kann zum Beispiel ausgedrückt sein durch ein Drehmoment oder eine mechanische Leistung sein. Eine Leistungsabgabe einer Komponente kann auch ein Ausgabesignal sein, welches von der Komponente ausgegeben wird und zur Steuerung einer oder mehrerer anderer Komponenten verwendet wird. Beispiele für weitere Komponenten sind: eine Benutzerschnittstelleneinheit, welche zur Anzeige und/oder Steuerung des Antriebssystems durch den Nutzer des Fahrrads ausgebildet ist; eine Gangschalteinrichtung, eine Sattelstützeneinrichtung, eine Dämpfungseinrichtung, welche jeweils mit einem Aktor ausgestattet sind. Die Komponenten des Antriebssystems sind drahtlos oder drahtgebunden miteinander verbunden. So kann zum Beispiel die Batterieeinheit eine Spannungsversorgung für die Komponenten bereitstellen, insbesondere für die Antriebseinheit.

Das Antriebssystem umfasst des Weiteren eine Steuereinheit, welche zur Steuerung des Antriebssystems ausgebildet ist. Die Steuereinheit kann beispielsweise als eigenständige Komponente ausgebildet sein, welche drahtlos oder drahtgebunden mit der Mehrzahl von Komponenten des Antriebssystems verbunden ist. Die Steuereinheit kann beispielsweise auch in eine der Komponenten des Antriebssystems integriert ausgebildet sein. So kann die Steuereinheit zum Beispiel in die Batterieeinheit oder in die Antriebseinheit integriert sein. Die Steuereinheit kann beispielsweise auch als ein verteiltes System verteilt auf mehrere Komponenten ausgebildet sein.

Die Unteransprüche zeigen bevorzugte Weiterbildungen der Erfindung.

Weiter bevorzugt umfasst das Verfahren den Schritt: Anpassen der Anforderungen anhand einer Nutzerangabe.

Ein Vorteil dieser Ausführungsform ist, dass die Anforderung der ersten und/oder der zweiten Komponente mittels der Nutzereingabe angepasst werden kann, um einem Fahrwunsch des Fahrers des Antriebssystems des elektrischen Fahrrads entsprechen zu können, wie beispielsweise eine Geschwindigkeitserhörung oder Drehmomenterhöhung an dem Antriebssystem. Beispielsweise kann anhand der Nutzereingabe, welche indikativ für eine Drehmoment- oder Geschwindigkeitserhöhung steht, die Anforderung der ersten und/oder der zweiten Komponente entsprechend angepasst bzw. aktualisiert werden. Somit kann sich ein erneuter Vergleich zwischen den angepassten Anforderungen der Komponenten hinsichtlich ihrer thermischen Belastungssituation ergeben. Mit dem erneuten Vergleichen kann eventuell ein erneutes Anpassen des Betriebsverhaltens erforderlich sein, wenn die angepassten Anforderungen derart gewählt sind, dass die thermische Belastungssituation diese nicht abbilden kann. Somit kann beispielsweise bei einer erhöhten Drehmomentanforderung die Leistungsabgabe in Form des Drehmoments um einen vorbestimmten Betrag oder dynamisch reduziert werden, um dem Fahrer ein angenehmes Fahrgefühl trotz thermischer Belastungssituation bereitstellen zu können.

Außerdem weist das Verfahren vorzugsweise den Schritt auf: Bereitstellen einer Eigenschaft der ersten Komponente und/oder der zweiten Komponente. Als Eigenschaft kann insbesondere eine Temperaturgröße angesehen werden, welche den thermischen Zustand der Komponente beschreibt. Eine Temperaturgröße kann zum Beispiel eine Temperatur oder ein Temperaturgradient sein.

Vorzugsweise ist bei dem Verfahren das Anpassen des Betriebsverhaltens dazu eingerichtet, eine Leistungsabgabe der ersten Komponente und/oder der zweiten Komponente zu reduzieren. Das Reduzieren der Leistungsabgabe erfolgt insbesondere durch allmähliches, zum Beispiel stufenweises oder kontinuierliches, Reduzieren der Leistungsabgabe, insbesondere um ein abruptes Stoppen der Leistungsabgabe aus einer vergleichsweise hohen Leistungsabgabe heraus möglichst zu vermeiden. Das allmähliche Reduzieren der Leistungsabgabe hat auch den Vorteil, dass eine Leistung über einen längeren Zeitraum abgegeben werden kann.

Ein Vorteil des Verfahrens ist, dass mittels der Regelschleife zwischen Eigenschaft (zum Beispiel Temperaturgröße), Anforderung (zum Beispiel Leistungsabgabe) und dem Anpassen des Betriebsverhaltens das Betriebsverhalten des Antriebssystems dynamisch angepasst werden kann unter Berücksichtigung der thermischen Belastungssituation der Komponenten des Antriebssystems. Somit kann die Fahrdynamik des elektrisch angetriebenen Fahrrads ohne große Änderungen bzw. Schwankungen erfolgen.

In einer Ausgestaltung des Verfahrens umfasst das Bereitstellen der Anforderung der ersten Komponente und/oder der Anforderung der zweiten Komponente ein Bereitstellen einer Leistungsabgabe der ersten Komponente und/oder der zweiten Komponente. Bei dem Bereitstellen der Leistungsabgabe kann es sich um eine aktuelle Leistungsabgabe oder eine zukünftige Leistungsabgabe handeln. Unter einer Leistungsabgabe einer Komponente ist eine Abgabe von Leistung der Komponente zu verstehen, wobei unterschiedliche physikalische Größen die Leistungsabgabe der jeweiligen Komponente repräsentieren können.

Unter einer Leistungsabgabe einer Antriebseinheit können zum Beispiel ein Drehmoment oder eine Geschwindigkeit zu verstehen sein, welche von der Antriebseinheit bereitgestellt werden können. Unter einer Leistungsabgabe einer Batterieeinheit können zum Beispiel ein Entladestrom oder eine Kapazität zu verstehen sein, welche die Batterieeinheit bereitstellen kann. Eine aktuelle Leistungsabgabe einer Komponente beschreibt insbesondere eine Leistungsabgabe, die momentan von der Komponente zur Verfügung gestellt werden kann. Eine zukünftige Leistungsabgabe beschreibt insbesondere eine Leistungsabgabe, die aufgrund einer Abschätzung, Berechnung oder dergleichen für einen späteren Zeitpunkt vorhergesagt wird.

Das Bereitstellen der Anforderung der ersten Komponente und/oder der Anforderung der zweiten Komponente kann ferner ein Bereitstellen einer Zeitgröße umfassen, welche angibt, wann eine Anpassung des Betriebsverhaltens der ersten Komponente und/oder der zweiten Komponente aufgrund einer thermischen Belastungssituation erforderlich ist. Die Leistungsabgabe der jeweiligen Komponente ist abhängig von der thermischen Belastungssituation der jeweiligen Komponente. Ist die thermische Belastungssituation der jeweiligen Komponente vergleichsweise hoch, so kann die Komponente nur für eine bestimmte Zeitdauer eine entsprechende Leistungsabgabe bereitstellen. Danach muss die Leistungsabgabe reduziert werden, um eine thermische Überlastsituation oder einen kritischen thermischen Zustand der Komponente zu vermeiden. Unter Berücksichtigung der thermischen Belastungssituation der Komponente kann eine Zeitgröße bestimmt werden, welche angibt, wann eine Anpassung des Betriebsverhaltens der Komponente erforderlich ist. Eine Zeitgröße kann ein Zeitpunkt sein, ab dem eine Reduzierung der Leistungsabgabe erforderlich ist, oder eine Zeitdauer, innerhalb welcher die Komponente die aktuelle Leistungsabgabe bereitstellen kann, oder eine Zeitdauer, innerhalb welcher die Komponente eine reduzierte Leistungsabgabe bereitstellen kann. Eine solche Zeitgröße kann zum Beispiel aus einer Temperatur und/oder einem Temperaturgradienten der Komponente und einer aktuellen und/oder zukünftigen Leistungsabgabe der Komponente und ggf. weiteren Parametern ermittelt werden.

Das Ermitteln der Zeitgröße kann insbesondere in einer Steuereinheit erfolgen.

Vorzugsweise umfasst das Vergleichen der Anforderung der ersten Komponente mit der Anforderung der zweiten Komponente ein Vergleichen der Zeitgröße der ersten Komponente mit der Zeitgröße der zweiten Komponente. Um die erste Komponente und die zweite Komponente hinsichtlich einer thermischen Belastungssituation zu vergleichen, werden die Zeitgrößen der beiden Komponenten miteinander verglichen, welche angeben, wann eine Anpassung des Betriebsverhaltens der Komponente erforderlich ist. Das Vergleichen der beiden Zeitgrößen kann insbesondere in einer Steuereinheit erfolgen.

Insbesondere umfasst das Vergleichen ein Ermitteln einer kritischen Komponente, wobei als kritische Komponente diejenige der beiden Komponenten angesehen wird, deren Zeitgröße kleiner ist als die Zeitgröße der anderen Komponente. Diejenige der beiden Komponenten mit der kleineren Zeitgröße ist stärker thermisch belastet als die andere Komponente und benötigt früher als die andere Komponente eine Anpassung des Betriebsverhaltens. Das Ermitteln der kritischen Komponente kann insbesondere in einer Steuereinheit erfolgen.

Ferner kann das Vergleichen bevorzugt auch ein Ermitteln einer reduzierten Leistungsabgabe der kritischen Komponente umfassen. Die reduzierte Leistungsabgabe ist dabei derart gewählt, dass ein eingepasstes Betriebsverhalten anhand der reduzierten Leistungsabgabe dazu führt, dass die Zeitgröße der kritischen Komponente vergrößert wird. Dies hat den Vorteil, dass das Betriebsverhalten der ersten und der zweiten Komponente hinsichtlich der thermischen Belastungssituation zumindest teilweise angeglichen wird: Der Unterschied zwischen der Zeitgröße der kritischen Komponente und der anderen Komponente verringert sich.

Bevorzugt erfolgt im nächsten Schritt das Anpassen des Betriebsverhaltens der kritischen Komponente anhand der reduzierten Leistungsabgabe. Damit kann die kritische Komponente über einen längeren Zeitraum eine Leistungsabgabe bereitstellen, wenn auch auf niedrigerem Niveau. Damit kann das Betriebsverhalten der beiden Komponenten zumindest teilweise aneinander angeglichen werden.

Ein Vorteil dieser Ausführungsform ist, dass im Falle einer thermischen Belastungssituation des Antriebssystems, ermittelt werden kann, welche der Komponenten als erste eine Leistungsreduzierung aufweisen sollte. Somit kann das Betriebsverhalten derjenigen Komponente verändert werden, welche den geringsten Zeitraum aufweist, sodass das gesamte Antriebssystem ein vergleichbares Betriebsverhalten aufweist, unabhängig davon, welche Komponente als erstes eine Leistungsreduzierung aufweisen sollte. Insbesondere wird das Betriebsverhalten des Antriebssystems als Ganzes derart verändert, dass das Fahrerlebnis für einen Nutzer keine merklichen Veränderungen aufweist.

Beispielsweise weist das Antriebssystem eine elektrische Batterieeinheit auf sowie eine elektrische Antriebseinheit. Dabei kann die Batterieeinheit eine Leistungsabgabe in Form eines Entladestroms und die Antriebseinheit als Leistungsabgabe ein Drehmoment bereitstellen. Beispielsweise kann die thermische Belastungssituation der Antriebseinheit derart sein, dass in fünf Minuten das Betriebsverhalten angepasst werden muss. Die thermische Belastungssituation der Batterieeinheit kann zum Beispiel derart sein, dass in drei Minuten das Betriebsverhalten der Batterieeinheit angepasst werden muss. Dabei kann somit die Batterieeinheit als diejenige Komponente identifiziert werden, welche die geringste Zeitgröße aufweist, wie in diesem Beispiel drei Minuten. Ferner kann die Leistungsabgabe bzw. das Betriebsverhalten der Batterieeinheit durch Reduzieren angepasst werden, sodass sich der Zeitraum erhöht. Dabei kann das Betriebsverhalten derart angepasst werden, dass die Leistungsabgabe insbesondere in einem Bereich erfolgt, welcher wenig bzw. keinen Einfluss auf die Fahrdynamik des elektrischen Fahrrads hat. Dabei kann die Reduzierung der Leistungsabgabe derart verändert werden, dass die Batterieeinheit ebenfalls in fünf Minuten die Anpassung des Betriebsverhaltens benötigt, sodass die Anpassung für die Batterieeinheit und die Antriebseinheit gleichzeitig erfolgt.

In einer Ausgestaltung des Verfahrens erfolgt das Anpassen des Betriebsverhaltens durch Reduzieren der Leistungsabgabe derart, dass eine komfortable Leistungsabgabe der ersten Komponente und/oder der zweiten Komponente ermöglicht wird. Unter einer komfortablen Leistungsabgabe soll eine Leistungsabgabe verstanden werden, welche von der jeweiligen Komponente bereitgestellt werden kann durch Einhalten vorbestimmter Grenzwerte für die Leistungsabgabe der jeweiligen Komponente. Diese vorbestimmten Grenzwerte sind systemseitig derart definiert, dass sie ein komfortables Fahrverhalten ermöglichen, auch dann, wenn eine thermische Belastungssituation von zumindest einer der Komponenten auftritt und ein Anpassen des Betriebsverhaltens aufgrund der thermischen Belastungssituation erforderlich ist. Eine komfortable Leistungsabgabe ist durch die vorbestimmten Grenzwerte so gesteuert, dass das Anpassen des Betriebsverhaltens für den Nutzer des Fahrrads im Wesentlichen nicht erkennbar ist. Der Nutzer des Fahrrads bemerkt das Reduzieren der Leistungsabgabe nicht, weil es allmählich erfolgt. Insbesondere ist eine komfortable Leistungsabgabe eine Leistungsabgabe, die eine abrupte Reduzierung der Leistungsabgabe bzw. eine steile Reduzierung mit einer hohen Reduzierung der Leistungsabgabe pro Zeiteinheit oder gar ein abruptes Abschalten verhindert. Auch wird die komfortable Leistungsabgabe erreicht, indem das Betriebsverhalten der Komponenten aufeinander abgestimmt angepasst wird.

In einer weiteren Ausgestaltung des Verfahrens ist ferner folgender Schritt vorgesehen: Vergleichen der Anforderung der ersten Komponente und/oder der zweiten Komponente mit einem vorbestimmten Grenzwert. Wird bei dem Vergleichen der Anforderung festgestellt, dass die Anforderung der ersten und/oder der zweiten Komponente, vorzugsweise die Anforderung beider Komponenten, den vorbestimmten Grenzwert nicht überschreitet, so wird das Antriebssystem zunächst weiter betrieben ohne Anpassen des Betriebsverhaltens oder einem anderen Eingriff in das Antriebssystem. Wird bei dem Vergleichen der Anforderungen mit dem vorbestimmten Grenzwert jedoch festgestellt, dass die erste und/oder die zweite Komponente mit ihrer Anforderung den vorbestimmten Grenzwert überschreitet, so wird folgender Schritt als nächstes durchgeführt: Vergleichen der Anforderung der ersten Komponente mit der Anforderung der zweiten Komponente hinsichtlich einer thermischen Belastungssituation der ersten Komponente und der zweiten Komponente. Dieser Verfahrensschritt wurde bereits weiter oben näher erläutert. Ein Eingriff in das Antriebssystem durch Vergleichen bzw. Abgleichen der thermischen Belastungssituation der im Antriebssystem verknüpften Komponenten erfolgt demnach insbesondere oberhalb eines vorbestimmten Grenzwertes. Unterhalb des vorbestimmten Grenzwertes erfolgt kein unnötiger Eingriff aufgrund einer bestimmten thermischen Belastungssituation.

Der vorbestimmte Grenzwert kann insbesondere dadurch definiert sein, dass die Anforderung der ersten Komponente und/oder der zweiten Komponente unterhalb des Grenzwerts eine stabile Leistungsabgabe der ersten Komponente und/oder der zweiten Komponente ermöglicht. Eine stabile Leistungsabgabe einer Komponente ist insbesondere eine Leistungsabgabe, bei der kein Anpassen des Betriebsverhaltens der Komponente aufgrund einer thermischen Belastungssituation erforderlich ist. Bei einer stabilen Leistungsabgabe einer Komponente kann die Komponente die Leistungsabgabe bereitstellen, ohne dass ein kritischer thermischer Zustand erreicht wird, welcher ein Anpassen des Betriebsverhaltens der Komponente erforderlich machen würde. Unterhalb eines so definierten Grenzwertes befinden sich die Komponenten in einem Temperaturbereich, der thermisch unkritisch ist.

In dieser Ausgestaltung des Verfahrens erfolgt ein Vergleichen bzw. Abgleichen der Anforderungen der Komponenten im System nur dann, wenn zumindest für eine der Komponenten hinsichtlich ihrer thermischen Belastungssituation ein Anpassen des Betriebsverhaltens bevorsteht. Liegen die Anforderungen beider bzw. aller Komponenten unterhalb des derart vorbestimmten Grenzwerts, befinden sich beide Komponenten in einem Bereich einer stabilen Leistungsabgabe, in dem kein Anpassen des Betriebsverhaltens aufgrund einer thermischen Belastungssituation erforderlich ist.

Der Grenzwert, bis zu welchem kein Eingriff in das Antriebssystem durch Vergleichen bzw. Abgleichen der Anforderungen der Komponenten erfolgt, kann alternativ auch anhand anderer Kriterien als der Kriterien für eine stabile Leistungsabgabe festgelegt werden.

Ein weiterer Aspekt der Erfindung betrifft ein Antriebssystem für zumindest ein zeitweise elektrisch angetriebenes Fahrrad, welche eine Steuereinheit aufweist. Dabei ist die Steuereinheit dazu eingerichtet, das erfindungsgemäße Verfahren durchzuführen. Die Steuereinheit ist dazu ausgebildet, zumindest eine Anforderung einer ersten Komponente und eine Anforderung einer zweiten Komponente aus einer Mehrzahl von Komponenten des Antriebssystems bereitzustellen. Die Steuereinheit ist auch dazu eingerichtet, die Anforderung der ersten Komponente mit der Anforderung der zweiten Komponente aus der Mehrzahl von Komponenten des Fahrrads hinsichtlich einer thermischen Belastung zu vergleichen. Die Steuereinheit ist ferner dazu ausgebildet, ein Betriebsverhalten der ersten Komponente und/oder der zweiten Komponente auf Basis des Vergleichs anzupassen.

Ein Vorteil des erfindungsgemäßen Antriebssystems ist, dass die Leistungsabgabe, wie zum Beispiel das Drehmoment der Komponente, anhand der Steuereinheit reduziert werden kann, wenn dies benötigt wird, um das Fahrverhalten des elektrisch angetriebenen Fahrrads möglichst gleichbleibend zu gestalten. Dabei kann das Antriebssystem insbesondere als erste Komponente eine Antriebseinheit und als zweite Komponente eine Batterieeinheit aufweisen.

Ein weiterer Aspekt der Erfindung betrifft ein zumindest zeitweise elektrisch betriebenes Fahrrad, welches ein Antriebssystem mit einer Mehrzahl an Komponenten und einer Steuereinheit aufweist, die dazu eingerichtet ist, Schritte des Verfahrens wie voranstehend und nachfolgend beschrieben durchzuführen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: zeigt eine logische Verknüpfung von Teilen des Verfahrens gemäß einer Ausführungsform,
- Figur 2: zeigt ein Flussdiagramm zur Illustration von Schritten des Verfahrens gemäß einer Ausführungsform,
- Figur 3: zeigt ein Flussdiagramm zur Illustration von Schritten des Verfahrens gemäß einer Ausführungsform,
- Figur 4: zeigt ein Fahrrad gemäß einer Ausführungsform,
- Figur 5: zeigt ein Antriebssystem gemäß einer Ausführungsform.

### Ausführungsform(en) der Erfindung

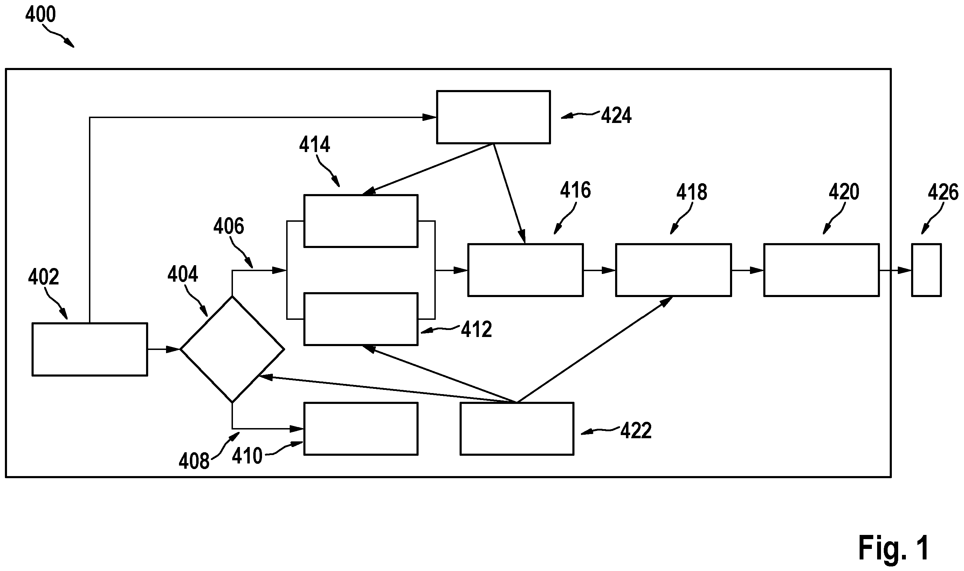

Figur 1 zeigt eine Illustration zum Verständnis der Logik zur Vermeidung von Leistungsverringerungen beim Betrieb eines Fahrrads gemäß einer Ausführungsform. Die Logik 400 umfasst dabei eine Vielzahl von einzelnen Schritten. Die Logik 400 umfasst dabei die Vorhersage einer zukünftigen Drehmoment- oder elektrischen Leistungsabgabeanfrage des Fahrers 402. In Abhängigkeit von der Leistungsanfrage 402 des Fahrers kann ein Vergleich 404 zwischen der Leistungsanfrage 402 und einem Grenzwert erfolgen. Falls der Grenzwert in dem Vergleich 404 nicht überschritten wird bzw. die Anforderung 402 erfüllt werden kann, werden keine weiteren Schritte erwogen 410. Sollte die Anforderung 402 in dem Vergleich 404 nicht erfüllt 406 werden können, kann eine Vielzahl von Schritten eingeleitet werden. Diese Schritte können dabei insbesondere eine Berechnung eines Zeitraums 414 sein, bis eine Leistungsminimierung stattfinden kann. Ferner kann einer dieser Schritte das Berechnen einer weichen bzw. komfortablen Leistungsminimierung 412 sein. Ein weiterer Schritt kann das Berechnen eines Zeitpunkts zum Initiieren der Leistungsminimierung 416 sein. Ein weiterer Schritt kann das Berechnen der Leistungs- bzw. Drehmomentgrenzen 418 sein. Ein weiterer Schritt kann das Ausgeben der Begrenzung bzw. der Leistungsminimierung 420 sein. Ein weiterer Schritt kann das Übertragen bzw. Überwachen der Grenze 426 sein. Die Schnittstelle 422 kann Informationen für die die Schritte 404, 412 und 418 bereitstellen. Anhand der Daten aus der Schnittstelle 422 können insbesondere eine stabile Leistungsabgabe bzw. Drehmoment vorhersagt werden.

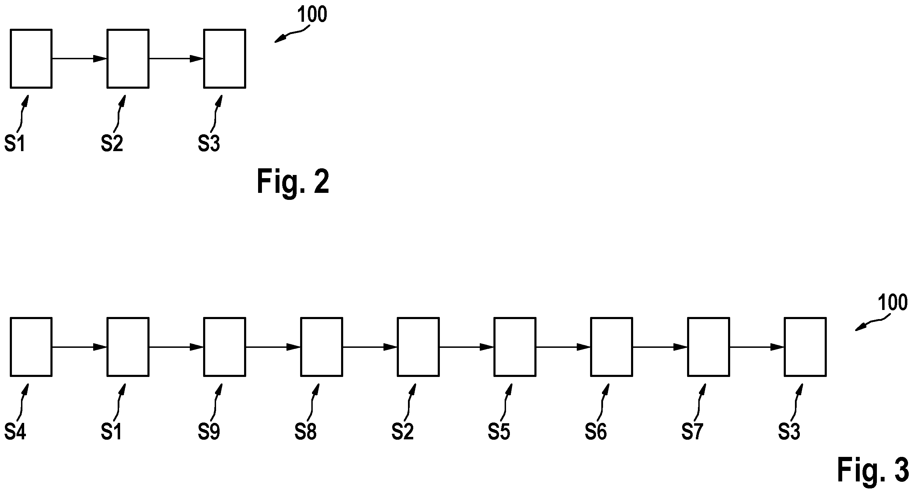

Figur 2 zeigt ein Flussdiagramm zur Illustration von Schritten des erfindungsgemäßen Verfahrens 100. Das Verfahren 100 umfasst dabei den Schritt Bereitstellen S1 zumindest einer Anforderung einer ersten Komponente 202 und einer Anforderung einer zweiten Komponenten 204 aus einer Mehrzahl von Komponenten 205 des Antriebssystems 200 des Fahrrads 300. Ferner weist das Verfahren 100 den Schritt Vergleichen S2 der Anforderung der ersten Komponente 202 mit der Anforderung der zweiten Komponente 204 hinsichtlich einer thermischen Belastungssituation auf. Das Verfahren 100 umfasst ferner den Schritt Anpassen S3 eines Betriebsverhaltens der ersten Komponente 202 und/oder der zweiten Komponente 204 auf Basis des Vergleichs.

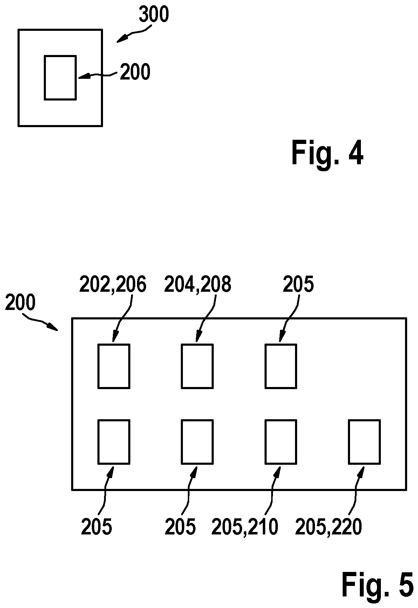

Figur 3 zeigt ein Flussdiagramm zur Illustration von Schritten des Verfahrens 100 gemäß einer Ausführungsform. Dabei umfasst das Verfahren 100 die Schritte S1 bis S3, wie diese bereits in der Figur 2 erläutert wurden. Dabei umfasst der Schritt Bereitstellen S1 der Anforderungen der ersten Komponente 202 und der zweiten Komponente 204 insbesondere ein Bereitstellen einer aktuellen oder zukünftigen Leistungsabgabe der ersten und der zweiten Komponente 202, 204 sowie ein Bereitstellen einer Zeitgröße der beiden Komponenten 202, 204, welche angibt, wann ein Anpassen des Betriebsverhaltens der jeweiligen Komponente aufgrund einer thermischen Belastungssituation erforderlich ist. Ferner umfasst das Verfahren 100 den Schritt Anpassen S4 der Anforderung anhand einer Nutzereingabe. Ferner umfasst das Verfahren 100 den Schritt Bereitstellen S9 einer Eigenschaft, zum Beispiel einer Temperaturgröße, der ersten und/oder der zweiten Komponente 202, 204. Zudem umfasst das Verfahren 100 den Schritt Vergleichen S5 der Zeitgröße der ersten Komponente 202 mit der Zeitgröße der zweiten Komponente 204 sowie Ermitteln S6 einer kritischen Komponente. Dabei wird diejenige der beiden Komponenten 202, 204 als kritische Komponente eingestuft, deren Zeitgröße kleiner ist als die Zeitgröße der anderen Komponente. Die kritische Komponente ist also diejenige der beiden Komponenten 202, 204, welche aufgrund ihrer thermischen Belastungssituation früher ein Anpassen des Betriebsverhaltens erforderlich macht. Weiterhin umfasst das Verfahren 100 den Schritt Ermitteln S7 einer reduzierten Leistungsabgabe der kritischen Komponente, wobei die reduzierte Leistungsabgabe dazu führt, dass die Zeitgröße der kritischen Komponente vergrößert wird. Die ermittelte reduzierte Leistungsabgabe wird im Schritt Anpassen S3 des Betriebsverhaltens der kritischen Komponente angewendet. Dadurch kann ein angenehmes Fahrgefühl für den Nutzer des Fahrrads erreicht werden. In der hier dargestellten Variante umfasst das Verfahren außerdem einen Schritt S8 Vergleichen der Anforderung der ersten Komponente 202 und der zweiten Komponente 204 mit einem vorbestimmten Grenzwert, welcher definiert, dass die Leistungsabgabe der ersten Komponente 202 und/oder der zweiten Komponente 204 unterhalb des Grenzwerts eine stabile Leistungsabgabe der Komponenten 202, 204 ermöglicht. Unterhalb des Grenzwerts befinden sich die Komponenten 202, 204 in einem Temperaturbereich, der für die Komponenten 202, 204 thermisch unkritisch ist. Ein Anpassen des Betriebsverhaltens, insbesondere ein Absenken der Leistungsabgabe, aufgrund einer thermischen Belastungssituation ist in diesem Bereich nicht erforderlich. Figur 4 zeigt schematisch ein zumindest teilweise elektrisch betriebenes Fahrrad 300 mit einem Antriebssystem 200 gemäß einer Ausführungsform. Das Antriebssystem 200 ist dazu eingerichtet, die Schritte des Verfahrens 100, wie voranstehend beschrieben, durchzuführen.

Figur 5 zeigt das Antriebssystem 200 gemäß einer Ausführungsform. Das Antriebssystem 200 umfasst eine Mehrzahl von Komponenten 205. Eine erste Komponente 202 wird durch eine Antriebseinheit 206 gebildet. Eine zweite Komponente 204 wird durch eine Batterieeinheit 208 gebildet. Eine weitere Komponente 205 wird durch eine Benutzerschnittstelleneinheit 210 gebildet. Das Antriebssystem 200 umfasst ferner eine Steuereinheit 220. In der Ausführungsform nach Figur 5 ist die Steuereinheit 220 als eigenständige, weitere Komponente 205 ausgebildet. In der Ausführungsform nach Fig. 5 sind noch drei weitere Komponenten 205 vorgesehen, die nicht näher bezeichnet sind. Beispiele für solche weiteren Komponenten 205 können sein: eine Gangschaltvorrichtung, eine Sattelstützeneinrichtung, eine Dämpfungseinrichtung. Die Steuereinheit 220 ist dazu eingerichtet, die Schritte des Verfahrens 100 wie voranstehend beschrieben durchzuführen.

## Patentansprüche

1. Verfahren (100) zum Betreiben eines eine Mehrzahl von Komponenten (202, 204, 205) umfassenden Antriebssystems (200) eines zumindest zeitweise elektrisch angetriebenen Fahrrads (300), aufweisend die Schritte:
- Bereitstellen (S1) zumindest einer Anforderung einer ersten Komponente (202) und einer Anforderung einer zweiten Komponente (204) aus der Mehrzahl der Komponenten des Antriebssystems (200),
- Vergleichen (S2) der Anforderung der ersten Komponente (202) mit der Anforderung der zweiten Komponente (204) hinsichtlich einer thermischen Belastungssituation der ersten Komponente (202) und der zweiten Komponente (204) ,
- Anpassen (S3) eines Betriebsverhaltens der ersten Komponente (202) und/oder der zweiten Komponente (204) auf Basis des Vergleichs.

2. Verfahren (100) nach Anspruch 1, ferner aufweisend den Schritt: Anpassen (S4) der Anforderung anhand einer Nutzereingabe.

3. Verfahren (100) nach einem der vorherigen Ansprüche, ferner aufweisend den Schritt: Bereitstellen (S9) einer Eigenschaft, insbesondere einer Temperaturgröße, der ersten Komponente (202) und/oder der zweiten Komponente (204).

4. Verfahren (100) nach einem der vorherigen Ansprüche, wobei das Anpassen (S3) des Betriebsverhaltens dazu eingerichtet ist, eine Leistungsabgabe der ersten Komponente (202) und/oder der zweiten Komponente (204) zu reduzieren.

5. Verfahren (100) nach einem der vorherigen Ansprüche, wobei das Bereitstellen (S1) der Anforderung der ersten Komponente (202) und/oder der Anforderung der zweiten Komponente (204) ein Bereitstellen einer, insbesondere aktuellen oder zukünftigen, Leistungsabgabe der ersten Komponente (202) und/oder der zweiten Komponente (204) umfasst.

6. Verfahren (100) nach einem der vorherigen Ansprüche, wobei das Bereitstellen (S1) der Anforderung der ersten Komponente (202) und/oder der Anforderung der zweiten Komponente (204) ein Bereitstellen einer Zeitgröße umfasst, welche angibt, wann ein Anpassen (S3) des Betriebsverhaltens der ersten Komponente (202) und/oder der zweiten Komponente (204) aufgrund einer thermischen Belastungssituation erforderlich ist.

7. Verfahren nach einem der vorherigen Ansprüche, wobei das Vergleichen (S2) der Anforderung der ersten Komponente (202) mit der Anforderung der zweiten Komponente (204) ein Vergleichen (S5) der Zeitgröße der ersten Komponente (202) mit der Zeitgröße der zweiten Komponente (204) umfasst.

8. Verfahren nach Anspruch 7, wobei das Vergleichen (S2) ein Ermitteln (S6) einer kritischen Komponente umfasst, wobei als kritische Komponente diejenige der beiden Komponenten (202, 204) angesehen wird, deren Zeitgröße kleiner ist als die Zeitgröße der anderen Komponente.

9. Verfahren nach einem der Ansprüche 7 bis 8, wobei das Vergleichen (S2) ein Ermitteln (S7) einer reduzierten Leistungsabgabe der kritischen Komponente umfasst, wobei die reduzierte Leistungsabgabe dazu führt, dass die Zeitgröße der kritischen Komponente vergrößert wird.

10. Verfahren nach Anspruch 9, wobei das Anpassen (S3) des Betriebsverhaltens der kritischen Komponente anhand der reduzierten Leistungsabgabe erfolgt.

11. Verfahren nach einem der Ansprüche 8 bis 10, wobei das Anpassen (S3) des Betriebsverhaltens dazu eingerichtet ist, die Leistungsabgabe der kritischen Komponente derart zu reduzieren, dass die Zeitgröße der kritischen Komponente vergrößert wird.

12. Verfahren (100) nach einem der vorherigen Ansprüche, wobei das Anpassen (S3) des Betriebsverhaltens durch Reduzieren der Leistungsabgabe derart erfolgt, dass ein Abschalten der ersten Komponente (202) und/oder der zweiten Komponente (204) vermieden wird.

13. Verfahren (100) nach einem der vorherigen Ansprüche, wobei das Anpassen (S3) des Betriebsverhaltens durch Reduzieren der Leistungsabgabe derart erfolgt, dass eine komfortable Leistungsabgabe der ersten Komponente (202) und/oder der zweiten Komponente (204) ermöglicht wird, wobei die komfortable Leistungsabgabe durch Einhalten vorbestimmter Grenzwerte für die Leistungsabgabe der jeweiligen Komponente (202, 204) definiert ist.

14. Verfahren (100) nach einem der vorherigen Ansprüche, ferner aufweisend den Schritt: Vergleichen (S8) der Anforderung der ersten Komponente (202) und/oder der zweiten Komponente (204) mit einem vorbestimmten Grenzwert, wobei das Vergleichen (S2) der Anforderung der ersten Komponente (202) mit der Anforderung der zweiten Komponente (204) hinsichtlich einer thermischen Belastungssituation der ersten Komponente (202) und der zweiten Komponente (204) durchgeführt wird, wenn der vorbestimmte Grenzwert überschritten wird.

15. Verfahren (100) nach Anspruch 14, wobei der vorbestimmte Grenzwert dadurch definiert ist, dass die Leistungsabgabe der ersten Komponente (202) und/oder der zweiten Komponente (204) unterhalb des Grenzwerts eine stabile Leistungsabgabe der ersten Komponente (202) und/oder der zweiten Komponente (204) ermöglicht, wobei die stabile Leistungsabgabe dadurch definiert ist, dass ein Anpassen des Betriebsverhaltens aufgrund einer thermischen Belastungssituation nicht erforderlich ist.

16. Antriebssystem (200) für ein zumindest zeitweise elektrisch angetriebenes Fahrrad (300), umfassend eine Mehrzahl von Komponenten (202, 204, 205)und eine Steuereinheit (220), welche dazu eingerichtet ist, zumindest eine Anforderung einer ersten Komponente (202) und eine Anforderung einer zweiten Komponente (204) bereitzustellen,
wobei die Steuereinheit (220) dazu eingerichtet ist, die Anforderung der ersten Komponente (202) mit der Anforderung der zweiten Komponente (204) hinsichtlich einer thermischen Belastungssituation der ersten Komponente (202) und der zweiten Komponente (204) zu vergleichen, wobei die Steuereinheit (220) dazu eingerichtet ist,
ein Betriebsverhalten der ersten Komponente (202) und/oder der zweiten Komponente (204) anzupassen.

17. Antriebssystem (200) nach Anspruch 16, wobei die erste Komponente (202) eine Antriebseinheit (206) und die zweite Komponente (204) eine Batterieeinheit (208) ist.

18. Fahrrad (300) mit einem Antriebssystem (200) nach Anspruch 16 oder 17.
